# EUROPÄISCHE PATENTSCHRIFT

(11) **EP 1 691 191 B1**
(45) Veröffentlichungstag und Bekanntmachung des Hinweises auf die Patenterteilung: **07.12.2011**
(21) Anmeldenummer: 05002813.3
(22) Anmeldetag: 10.02.2005
(51) Int. Cl.: G01N 27/414, G01N 33/543

(54) **Verfahren und Vorrichtung mit SGFET, zum Nachweisen und/oder Messen von Liganden in einem Analyten**
Method and device with SGFET, for detecting and/or measuring ligands in an analytes
Méthode et dispositif avec SGFET, pour détecter et/ou mesurer des ligands dans un analyte

(43) Veröffentlichungstag der Anmeldung: 16.08.2006
(73) Patentinhaber: Micronas GmbH, 79108 Freiburg i. Br. (DE)
(72) Erfinder: Lehmann, Mirko, Dr., 9642 Ebnat-Kappel (DE)
(74) Vertreter: Koch, Bertram

(56) Entgegenhaltungen:
- EP-A- 1 422 519
- WO-A-02/088691
- DE-A1- 19 849 932
- HALL E. A. H.: "Biosensoren" 1995, SPRINGER , XP002335499 * Seiten 94-95, Absatz 4.7; Abbildung 4.14 *
- LEHMANN M: "Nanometre dimensions in bio and gas sensor technology" MST NEWS VDI/VDE-TECHNOLOGIEZENTRUM INFORMATIONSTECHNIK GERMANY, Nr. 4, August 2004 (2004-08), Seiten 43-45, XP002335486
- PRUCKER O ET AL: "PHOTOCHEMICAL ATTACHMENT OF POLYMER FILMS TO SOLID SURFACES VIA MONOLAYERS OF BENZOPHENONE DERIVATIVES" JOURNAL OF THE AMERICAN CHEMICAL SOCIETY, AMERICAN CHEMICAL SOCIETY, WASHINGTON, DC, US, Bd. 121, Nr. 38, 29. September 1999 (1999-09-29), Seiten 8766-8770, XP002307406 ISSN: 0002-7863

## Beschreibung

Die Erfindung betrifft eine Vorrichtung zum Nachweisen und/oder Messen der Konzentration mindestens eines In einem Analyten enthaltenen Liganden sowie ein Verfahren zum Nachweisen und/oder Messen mindestens eines in einem Analyten enthaltenen Liganden

Eine derartige Vorrichtung zum Nachweisen von in einer Ausatemgasprobe enthaltenen Liganden ist aus Carpagnano, G.E. et al., "Increased inflammatory markers in the exhaled breath condensate of cigarette smokers", Eur Respir J 2003, Seite 589-593 bekannt. Die Vorrichtung weist eine Probengasführung auf, durch welche die von einem Probanden ausgeatmete Luft zu einer Kühleinrichtung geleitet wird, welche die Luft derart abkühlt, dass darin enthaltene Feuchtigkeit und dergleichen volative Substanzen kondensieren. Das so erhaltene Atemgaskondensat wird in Form von Eis bei einer Temperatur von -20° C in einem Behälter gesammelt und danach in Eppendorf-Röhrchen transferiert, in denen es bei einer Temperatur von -70°C zwischengelagert wird. Danach wird mit Hilfe von spezifischen Immunoassays die Konzentration von Interleukin-6 und Leukotrin B₄ in dem Atemgaskondensat gemessen. Es wurde nachgewiesen, dass die Interleukin-6 und Leukotrin B₄ bei Rauchern höher ist als bei entsprechenden Vergleichpersonen, die Nichtraucher sind. In entsprechender Weise kann der Ausatemgasprobe auch auf das Vorhandensein anderer Liganden untersucht werden. Anhand der Messergebnisse lassen sich insbesondere Atemwegsinfekte nicht-invasiv nachwelsen. Es wird vermutet, dass es sogar möglich ist, Bronchialkarzinome, beispielsweise anhand von in der Ausatemgasprobe enthaltenen malignen Zellen, nicht-invasiv nachzuweisen. Die Vorrichtung hat jedoch den Nachteil, dass die Gewinnung und Untersuchung des Atemgaskondensats relativ aufwendig und teuer ist.

Es besteht deshalb die Aufgabe, eine Vorrichtung der eingangs genannten Art zu schaffen, die es ermöglicht, einen Liganden auf einfache Welse in einem flüssigen und/oder gasförmigen Analyten nachzuweisen. Femer besteht die Aufgabe, ein Verfahren zum Nachweisen und/oder Messen mindestens eines in einem Analyten enthaltenen Liganden anzugeben.

Diese Aufgabe wird dadurch gelöst, dass die Vorrichtung ein Substrat aufweist, auf dem mindestens ein Sensorbereich gebildet ist, der durch einen Zwischenraum von einem Suspended Gate beabstandet ist, dass das Suspended Gate mindestens einen dem Zwischenraum zugewandten Oberflächenbereich aufweist, auf dem mindestens ein für den Liganden bindungsspeziffscher Rezeptor Immobilisiert ist, der über den Zwischenraum kapazitiv an den Sensorbereich gekoppelt ist dass die dem Sensorbereich abgewandte Rückseite des Suspended Gates mit dem Analyten in Verbindung bringbar ist, und dass das Suspended Gate zum Inkontaktbringen des mindestens einen Rezeptors mit dem Liganden für den Analyten durchlässig ausgebildet ist.

Der Analyt kann also von der Rückseite des Suspended Gates durch dieses hindurch zu dem mindestens einen an der Vorderseite des Suspended Gates befindlichen Rezeptor gelangen und an diesen binden. Der so an der Oberfläche des Suspended Gates gebildete Rezeptor-Liganden-Komplex bewirkt eine Veränderung der elektrischen Eigenschaften im Bereich der Oberfläche, wie zB. der Austrittsarbeit. Diese Veränderung wird mit Hilfe des Sensorbereichs kapazitiv gemessen, was einen qualitativen und/oder quantitativen Nachweis des Liganden in dem Analyten ermöglicht. Das Suspended Gate kann mindestens eine elektrisch leitende Schicht und gegebenenfalls wenigstens eine weitere Schicht umfassen, die elektrisch leitend und/oder nichtleitend sein kann. Die mindestens eine elektrisch leitende Schicht liegt bevorzugt auf einem vorgegebenen elektrischen Bezugspotential. Der mindestens eine Rezeptor umfasst Nukleinsäuren oder Derivate davon (DNA, RNA, PNA, LNA, Oligonukleotide, Plasmide, Chromosomen), Peptide, Proteine (Enzym, Oligopeptide, zelluläre Rezeptorproteine und deren Komplexe, Peptidhormone, Antikörper und deren Fragmente), Kohlenhydrate und deren Derivate, insbesondere glykosylierte Proteine und Glycoside.

Bei einer bevorzugten Ausführungsform der Erfindung ist das Suspended Gate als mikroporöse Schicht ausgebildet oder weist eine solche auf. Der Analyt kann dann von der Rückseite des Suspended Gates durch dieses hindurch zu dem mindestens einen Rezeptor diffundieren. Ein solches Suspended Gate lässt sich kostengünsfig herstellen.

Vorteilhaft ist, wenn die mikroporöse Schicht mit einer vorzugsweise gitterförmig strukturierten Metallschicht beschichtet ist, an der ein elektrisches Bezugspotential anliegt. Die Metallschicht besteht vorzugsweise aus einem Edelmetall, beispielsweise aus Gold, Platin oder Palladium. Sie kann an der dem Sensorbereich abgewandten Rückseite des Suspended Gates angeordnet sein. Zwischen der mikroporösen Schicht und der Metallschicht kann mindestens eine Zwischenschicht angeordnet sein, insbesondere eine Haftvermiittlerschicht.

Bei einer vorteilhaften Ausgestaltung der Erfindung hat das Suspended Gate mindestens eine Durchtrittsöffnung, die das Suspended Gate quer zu seiner Erstreckungsebene durchsetzt. Die Durchtrittsöffnung ist vorzugsweise als Kapillare ausgebildet, durch welche der Analyt von der Rückseite des Suspended Gate zu dem mindestens einen Rezeptor gelangen kann. Das Suspended Gate ist vorzugsweise flächig von einer Vielzahl nebeneinander angeordneter Kapillaren durchsetzt, die durch dünne Zwischenwände voneinander beabstandet sind Ein derart strukturiertes Suspended Gate, das insbesondere wabenartige ausgestaltet sein kann, wird bevorzugt mit Hilfe eines Ätzverfahrens hergestellt. Die Kapillaren können eine licht Weite von 5 bis 200 µm, insbesondere 5 bis 100 µm und bevorzugt 5 bis 20 µm aufwelsen. Durch die Kapillaren vergrößert sich die Oberfläche des Suspended Gates. Die Rezeptoren können auch im Inneren der Kapillaren auf dem Suspended Gate immobilisiert sein, was bezogen auf die Grundfläche des Suspended Gates eine höhere Dichte der darauf immobilisierten Rezeptoren ermöglicht

Vorzugsweise ist das Suspended Gate zum Inkontaktbringen des mindestens einen Rezeptors mit dem Liganden lösbar mit dem Substrat verbunden.

Das Suspended Gate kann also von dem Substrat getrennt werden, so dass der mindestens eine darauf Immobilisierte Rezeptor gut zugänglich ist und auf einfache Weise mit dem Analyten In Kontakt gebracht werden kann. Dabei ist des sogar möglich, dass ein Kapillaren oder dergleichen Öffnungen aufweisendes Substrat quer zu seiner Erstreckungsebene in dem Analyt vorzugsweise hin- und herbewegt wird, damit die darin enthaltenen Liganden noch schneller mit den Rezeptoren in Kontakt geraten können.

Somit können in dem Analyten enthaltene Liganden spezifisch an den Rezeptor binden. Gegebenenfalls kann das Suspended Gate danach mit Hilfe einer Spülflüssigkeit gewaschen werden, um dessen Oberfläche von flüssigen und/oder festen Bestandteilen des Analyten, die nicht an einen Rezeptor gebunden sind, zu reinigen. Um die Messempfindlichkeit zu erhöhen, ist es sogar möglich, an der Oberfläche des Suspended Gates befindliche Rezeptor-Ligandenkomplexe mit einem Marker, wie z.B. Metallpartikeln, zu markieren.

Nachdem das Suspended Gate mit dem Analyten in Kontakt gebracht wurde, wird es derart an dem Substrat positioniert, dass der mindestens eine Rezeptor dem Sensorbereich zugewandt und durch den Zwischenraum von diesem beabstandet ist. Somit kann ein eventueller, an den mindestens einen Rezeptor gebundener Ligand und/oder Marker kapazitiv detektiert werden. An dem Suspended Gate wird dazu bevorzugt ein definiertes elektrisches Bezugspotential angelegt.

Bei einer vorteilhaften Ausführungsform der Erfindung ist zum lösbaren Verbinden des Suspended Gates mit dem Substrat eine Steckkupplung vorgesehen, die an dem Substrat ein Kupplungselement und an dem Suspended Gate ein dazu passendes Kupplungsgegenstück aufweist. Die Vorrichtung ist dann noch leichter handhabbar. In Verbindungsstellung der Kupplungsteile der Steckkupplung sind das Suspended Gates und das Substrat in einer definierten Lage relativ zueinander posltionlert.

Bei einer bevorzugten Ausgestaltung der Erfindung weist das Suspended Gate mehrere Oberflächenbereiche auf, auf denen Rezeptoren unterschiedlicher Art und/oder mit unterschiedlicher Oberflächenbelegungsdichte Immobilisiert sind, wobei den einzelnen Oberflächenbereichen des Suspended Gates auf dem Substratjeweils ein Sensorbereich zugeordnet ist. Mit der Vorrichtung können dann ggf mehrere unterschiedliche Liganden detektiert werden. Wenn für mindestens einen Rezeptor mehrere Oberflächenbereiche vorgesehen sind, in denen der Rezeptor mit unterschiedlicher Oberflächenbelegungsdichte angeordnet ist, ermöglicht die Vorrichtung, die Konzentration des für diesen Rezeptor bindungsspezlfischen Liganden in einem breiten Konzentrationsbereich zu messen.

Vorteilhaft ist, wenn wenigstens ein Sensorbereich als Referenzsensorbereich ausgebildet ist, in dessen Detektionsreichweite kein Rezeptor oder zumindest kein an einen in dem Analyt enthaltenen Liganden bindender Rezeptor angeordnet ist. Mit Hilfe des Referenzsensorbereich kann dann ein Referenzsignal gemessen werden, mit dessen Hilfe Messsignalveränderungen, die nicht auf einen an einen Rezeptor gebundenen Liganden zurückzuführen sind, wie z.B. Messsignalveränderungen aufgrund von Temperatur- und/oder Luftfeuchtigkeitsschwankungen, kompensiert werden können. Die Vorrichtung ermöglicht somit eine hohe Messgenauigkeit.

Bei einer vorteilhaften Ausführungsform der Erfindung ist der Sensorbereich durch einen Kanalbereich eines ISFET gebildet. Durch die durch das Binden eines Liganden an den aufdem Suspended Gate immobilisierten Rezeptor bewirkte Veränderung der Austrittsarbelt an der Oberfläche des Suspended Gates wird die elektrische Leltfähigkeit des Kanalbereichs beeinflusst, was einen qualitativen und/oder quantitativen Nachweis des Liganden in dem Analyten ermöglicht.

Bei einer anderen vorteilhaften Ausgestaltung der Erfindung ist der Sensorbereich durch eine Sensorelektrode gebildet, die elektrisch leitend mit einer an einem Kanalbereich eines CCFET angeordneten Gateelektrode verbunden ist. Dabei kann der Kanalbereich seitlich zu dem ihm zugeordneten Rezeptor versetzt und insbesondere außerhalb des von dem Suspended Gate überdeckten Substratbereichs angeordnet sein.

Vorzugsweise hat die Vorrichtung mindestens einen Gassensor, insbesondere einen NO- und/oder CO₂-Sensor, wobei der Gassensor bevorzugt einen ISFET und/oder CCFET mit einem gassensitiven Suspended Gate aufweist. Mit Hilfe der Vorrichtung kann dann beispielsweise eine Ausatemprobe noch umfassender analysiert werden. Solche Gassensoren sind z.B. in WO 02/088691 offenbart.

Bei einer vorteilhaften Ausführungsform der Erfindung ist an der Oberfläche des Substrats oder einer darauf befindlichen Schicht zwischen dem mindestens einen Rezeptor und dem Kanalbereich und/oder der Sensorelektrode eine hydrophobe Schicht angeordnet. Dadurch wird die Adsorption von Feuchtigkeit an der Oberfläche des Substrats und/oder der darauf befindlichen Schicht erschwert oder sogar vollständig verhindert. Somit wird der Transport von Ionen zwischen dem Kanalbereich bzw. der Sensorelektrode und davon beabstandeten Stellen des Substrats, die ein anderes elektrisches Potential aufweisen als der Kanalbereich bzw. die Sensorelektrode, entsprechend eingeschränkt. Die Messgenauigkeit der Vorrichtung ist dadurch weitgehend unabhängig von der Luftfeuchtigkeit. Der mit Wasser gemessene, auf eine plane Oberfläche bezogene statische Kontaktwinkel der hydrophoben Schicht kann mindestens 70°, ggf mindestens 90°, insbesondere mindestens 105° und bevorzugt mindestens 120° betragen. Die hydrophobe Schicht kann mindestens ein fluoriertes oder perfluoriertes Polymer enthalten.

Vorteilhaft ist, wenn die Vorrichtung an ihrer Oberfläche einen elektrisch leitfähigen Guardring aufweist, der den mindestens einen Kanalbereich und/oder die mindestens eine Sensorelektrode mit Abstand zu dem Kanalbereich und/oder der Sensorelektrode umgrenzt, und wenn die hydrophobe Schicht zumindest in einem zwischen dem Guardring und dem Kanalbereich und/oder der Sensorelekfirode befindlichen Bereich der Oberfläche der Vorrichtung angeordnet ist. Durch den 6uardring wird verhindert, dass das Potential über dem Kanalbereich bzw. das Potential der Sensorelektrode nach einer bestimmten Zeit durch die an der Oberfläche der Vorrichtung noch vorhandene elektrische Leitfähigkeit auf das Potential des an den Kanalbereich kapazitiv angekoppeften Suspended Gates gezogen wird. Somit wird eine Potentialdrift vermieden und es wird eine noch größere Messgenauigkeit erreicht.

Bei einer bevorzugten Ausführungsform der Erfindung weist der mindestens eine Oberflächenbereich eine Silanschicht auf, an welcher der mindestens eine Rezeptor verankert ist. Durch die Silanschichtt wird ein gutes Anhaften des Rezeptors an der Oberfläche des Suspended Gates ermöglicht.

Bei einer vorteilhaften Ausgestaltung der Erfindung weist das Suspended Gate zumindest eine Polymerschicht auf, wobei der mindestens eine Rezeptor an der Polymerschicht verankert ist. Dabei ist die Polymerschicht vorzugsweise eine Polyimidschicht. Die Polymerschicht kann dreidimensional ausgebildet sein und miteinander vemetzte Moleküle und/oder Strukturen aufweisen. Die Oberfläche des Polymers ist dadurch entsprechend vergrößert, so dass die Rezeptoren mit großer Dichte auf dem Suspended Gate immobilisiert sein können. Außerdem können bei einem Kontakt des Analyts mit der 3D-Polymerschicht Kapillarkräfte auftreten, die bewirken, dass die Polymerschicht den Analyten aufsaugt.

Bei einer vorteilhaften Ausführungsform der Erfindung Ist die mindestens eine Drain und/oder die zumindest eine Source mit einem Messsignaleingang einer Auswerteeinrichtung verbunden, wobei die Auswerteeinrichtung einen Datenspeicher aufweist, in dem mindestens ein Vergleichssignal abgelegt ist, und wobei die Auswerteeinrichtung zum Vergleichen des an dem Messsignaleingang anliegenden Messsignals mit dem Vergleichssignal eine mit dem Datenspeicher und dem Messsignalefngang verbundene Vergleichseinrichtung aufweist. Die Vergleichseinrichtung kann dabel zur Ausgabe des Vergleichsergebnisses mit einer optischen und/oder akustischen Anzeigeeinrichtung verbunden sein. Diese kann im elnfachsten Fall eine binäre Anzeige (gut/schlecht) sein, beispielsweise eine Leuchtanzeige. Gegebenenfalls ist es sogar möglich, über die Anzeige eine Diagnose für das Vorliegen oder Nichtvorliegen einer Krankheit auszugeben. In der Auswerteeinrichtung können dazu ggf. für mehrere unterschiedliche, in dem Analyten enthaltene Liganden Messwerte erfasst und miteinander und/oder mit mindestens einem Vergleichssignal verglichen und/oder verknüpft werden. Ferner kann die Anzeigeeinrichtung in Abhängigkeit vom zeitlichen Verlauf mindestens eines einem Liganden zugeordneten Messsignals angesteuert werden.

Vorteilhaft ist, wenn die Vorrichtung zum Temperieren des Zwischenraums eine Heiz- und/oder Kühleinrichtung außueist, Dadurch kann In dem Zwischenraum eine für die Messung und/oder die Haltbarkeit der Rezeptoren und/oder Liganden günstige Temperatur eingestellt werden, beispielsweise, um eine vorbestimmte Menge Feuchtigkeit an der Oberfläche des Suspended Gates einzustellen. Bei Bedarf kann durch entsprechendes Ansteuern der Heiz- und/oder Kühleinrichtung ein Beschlagen der Oberfläche des Suspended Gates und/oder des Sensorbereichs vermieden werden.

Wenn der Analyt eine Ausatemgasprobe ist, kann das Inkontaktbringen des Analyten mit dem mindestens einen für den Liganden bindungsspezifischen Rezeptor dadurch erfolgen, dass ein Proband auf die dem Sensorbereich abgewandte Rückseite des Suspended Gates bläst und/oder die Rückseite anhaucht. Dabei kann der Proband gegebenenfalls auch mehrmals auf das Suspended Gate blasen, um eine größere Anzahl von Liganden mit dem oder den auf dem Suspended Gate Immobilisierten Rezeptor(en) in Kontakt zu bringen. Der Ligand diffundiert dann beispielsweise durch an der Oberfläche und/oder in der Durchtrittsöffnung des Suspended Gates befindliche Feuchtigkeit hindurch von der Rückseite zu dem an der Vorderseite des Suspended Gates befindlichen Rezeptor und bindet anschließend an diesen. Gegebenenfalls ist es auch möglich, das Ausatemgas über eine Probengasführung zu dem Suspended Gate zu leiten. Die Probengasführung kann an ihrem einen Ende ein Mundstück aufweisen und mit ihrem anderen Ende der Rückseite des Suspended Gates zugewandt sein. Bevor der Analyt mit dem mindestens einen Rezeptor in Kontakt gebracht wird, kann an dem Rezeptor eine Referenzmessung durchgeführt werden. Das dabei erhaltene Messsignal kann zwischengespeichert und mit einem Messsignal verglichen werden, das nach dem Inkontaktbringen des Analyten mit dem Rezeptor gemessen wurde.

Der Analyt kann auch eine Körperflüssigkeit, wie z.B. Speichel, Schweiß, Blut und/oder Urin sein. Zur Untersuchung der Körperflüssigkeit wird diese zunächst mit der Rückseite des Suspended Gates in Kontakt gebracht, so dass eventuelle in der Körperflüssigkeit enthaltene Liganden durch das Suspended Gate hindurch zu dem mindestens einen, an dessen dem Kanalbereich zugewandter Vorderseite immobilisierten Rezeptor diffundieren und dann kovalent an diesen binden können. Das Inkontaktbringen von Speichel mit dem Suspended Gate erfolgt vorzugsweise, indem der Proband das Suspended Gate bespuckt.

Ein Verfahren zur Verwendung der Erfindungsgemäßen Vorrichtung beinhaltet, dass der Analyt mit dem mindestens einen auf dem Gate immobilisierten Rezeptor derart in Kontakt gebracht wird, dass der Ligand an diesen bindet, dass das Gate mit dem Rezeptor dem Sensorbereich zugewandt derart an dem Sensorbereich positioniert wird, dass zwischen diesem und dem Rezeptor ein Zwischenraum gebildet wird, und dass der Ligand danach mit Hilfe des Sensorbereichs durch den Zwischenraum hindurch kapazitiv detektiert wird.

Bei diesem Verfahren kann der Analyt, beispielsweise eine Körperflüsslgkeitsprobe oder eine Ausatemgasprobe, direkt mit dem Rezeptor in Kontakt gebracht werden, ohne dass sie zuvor durch das Suspended Gate und/oder eine darin vorgesehene Durchtrittsöffnung hindurch diffundieren muss. Das Verfahren ermöglicht dadurch einen schnellen Nachweis des Liganden in dem Analyten. Mit dem Verfahren kann auch die Konzentration des Liganden bestimmt werden.

Nachfolgend sind Ausführungsbeispiele der Erfindung anhand der Zeichnung näher erläutert. Es zeigen:
- Fig. 1: einen Querschnitt durch eine Vorrichtung zur markeierungsfreien Detektion der Konzentration von In einer zu analysierenden Probe ent- haltenen Liganden, wobei die Vorrichtung einen ISFET mit einem Suspended Gate aufweist,
- Fig. 2: einen Längsschnitt durch die in Fig. 1 gezeigte Vorrichtung,
- Fig. 3: einen Querschnitt durch eine Vorrichtung zum Nachweisen und/oder Messen der Konzentration von in einer zu analysierenden Probe enthaltenen Liganden, wobei die Vorrichtung einen CCFET mit einem Suspended Gate aufweist,
- Fig. 4: einen Querschnitt durch die in Fig. 3 gezeigte Vorrichtung,
- Fig. 5: einen Längsschnitt durch eine Vorrichtung, die ein lösbar mit einem Substrat verbindbares Suspended Gate aufweist, wobei das Suspended Gate in Verbindungsstellung angeordnet ist,
- Fig. 6: eine Darstellung ähnlich Fig. 5, wobei jedoch das Suspended Gate in Vormontagestellung angeordnet ist, und
- Fig. 7: einen Längsschnitt durch eine Vorrichtung, bei der auf dem Suspended Gate mehrere Oberflächenbereiche vorgesehen sind, auf denen Rezeptoren unterschiedlicher Art und/oder Oberflächenbelegungsdichte immobilisiert sind.

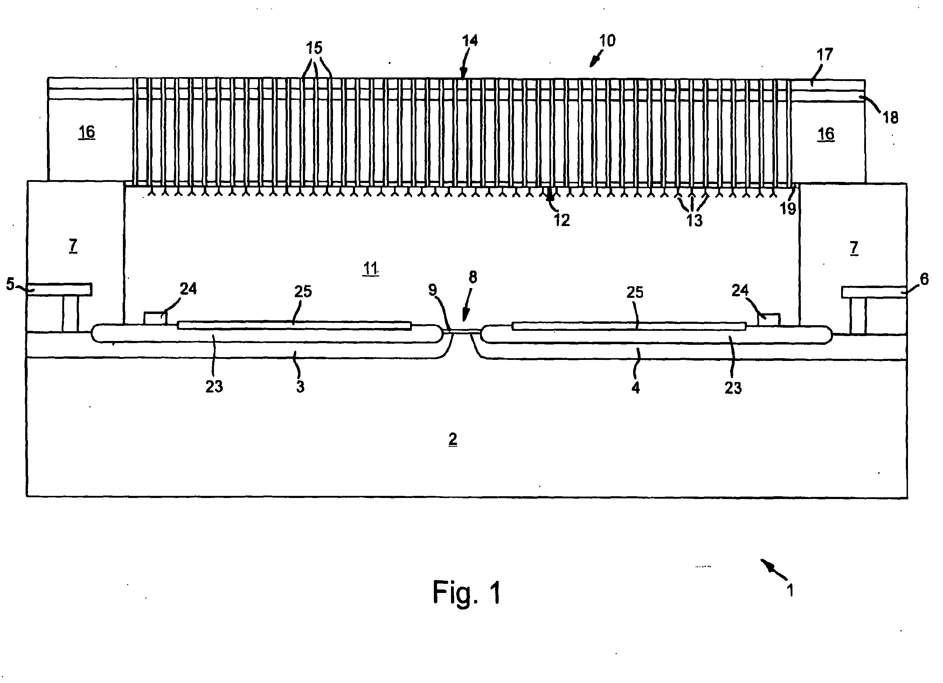

Eine im Ganzen mit 1 bezeichnete Vorrichtung zum Nachweisen und/oder Messen der Konzentration von in einer Ausatemgasprobe, einer Körperflüssigkeit oder dergleichen gasförmigen oder flüssigen Analyten enthaltenen Liganden weist ein Substrat 2 eines ersten Ladungsträgertyps auf, das z.B. aus p-dotiertem Silizium bestehen kann. Auf dem Substrat 2 sind eine Drain 3 und eine Source 4 eines zweiten Ladungsträgertyps angeordnet. Die Drain 3 und die Source 4 können beispielsweise aus n-dotiertem Silizium bestehen. Wie in Fig. 1 besonders gut erkennbar ist, ist die Drain 3 ist über eine elektrische Leiterbahn mit einem Drain-Anschluss 5 verbunden. In entsprechender Weise ist die Source 4 mit einem Source-Anschluss 6 verbunden. Der Drain-Anschluss 5 und der Source-Anschluss 6 sind jeweils an einer auf dem Substrat 2 deponierten Schicht 7 angeordnet.

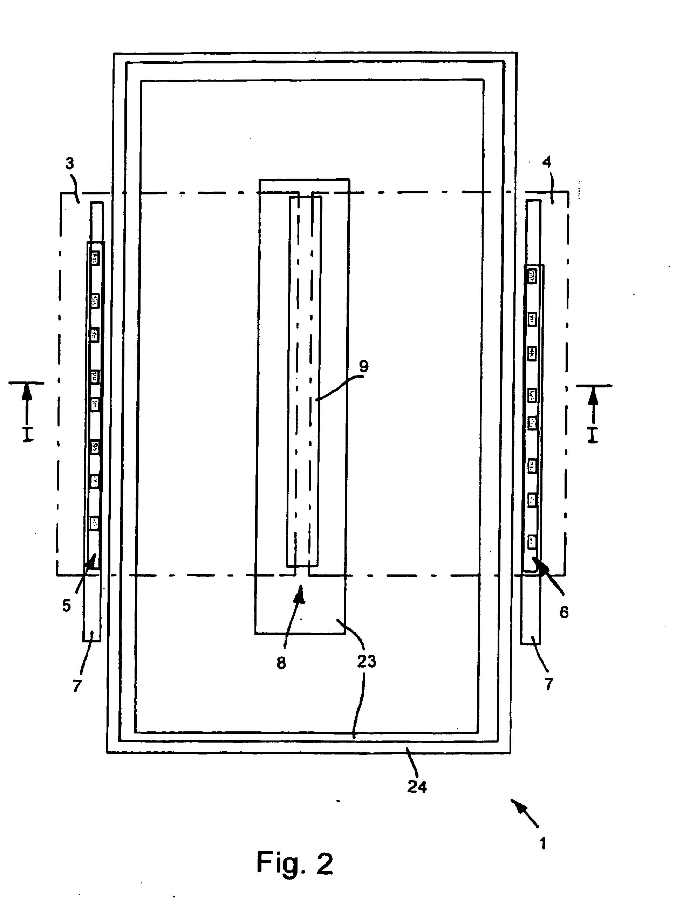

Wie In Fig. 2 besonders gut erkennbar ist, Ist zwischen Drain 3 und Source 4 in dem Substrat 2 ein Kanalbereich 8 gebildet, auf dem bei dem Ausführungsbeispiel eine elektrisch isolierende Dünnoxidschicht 9 angeordnet ist, die als Gatedielektrikum dient. Die Dünnoxidschicht 9 hat etwa eine Schichtdicke von 3-150 nm.

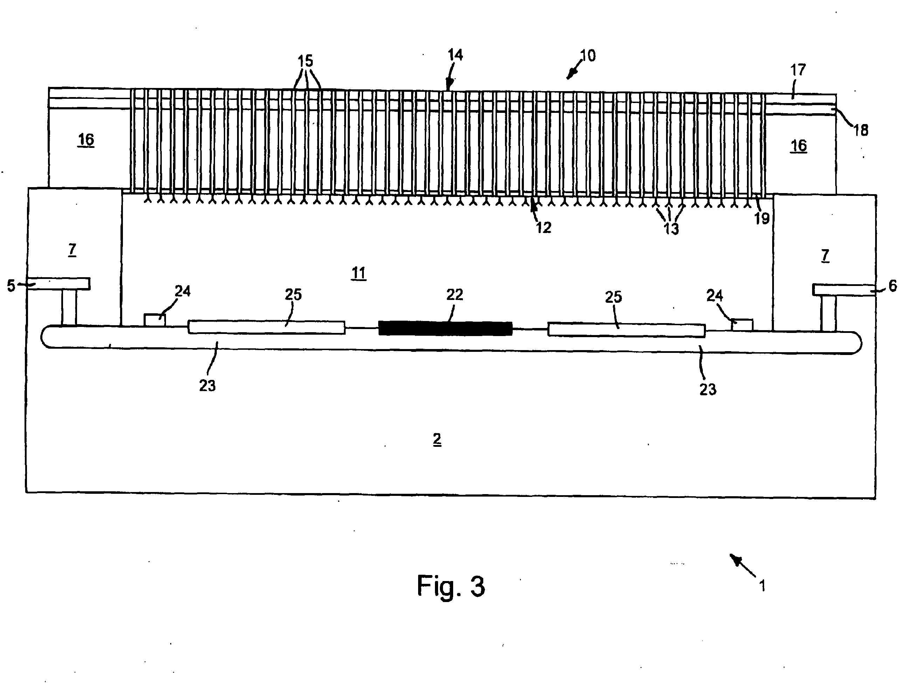

Dem Kanalbereich 8 ist ein Suspended Gate 10 zugeordnet, das durch einen Zwischenraum 11 von dem Kanalbereich beabstandet Ist und einen dem Zwischenraum 11 zugewandten Oberflächenbereich 12 aufweist, auf dem für den Liganden bindungsspezifische Rezeptoren 13 immobilisiert sind. Die Rezeptoren 13 sind über den Zwischenraum 11 kapazitiv an den Kanalbereich 8 gekoppelt. In Fig. 1 und 3 ist erkennbar, dass das Suspended Gate 10 über die deponierte Schicht 7 gegen das Substrat 2 abgestützt ist.

Die dem Kanalbereich 8 abgewandte Rückseite 14 des Suspended Gates 10 ist für die zu untersuchende Ausatemgasprobe und/oder Körperflüssigkeit zugänglich und mit dieser in Kontakt bringbar, beispielsweise indem ein Proband, dessen Ausatemgasprobe untersucht werden soll, die Rückseite 14 anhaucht. Das Suspended Gate 10 ist für In der Ausatemgasprobe enthaltene Feuchtigkeit und/oder die Körperflüssigkeit durchlässig, so dass darin enthaltene Liganden durch das Suspended Gate 10 hindurch zu den Rezeptoren 13 diffundieren und kovalent an diese binden können. In Fig. 1 und 3 ist deutlich ist erkennbar, dass das Suspended Gate 10 Durchtrittsöffnungen 15 hat, die es quer zu seiner Erstreckungsebene durchsetzen.

Femer ist erkennbar, dass das Suspended Gate 10 eine Trägerschicht 16 aufweist, die an ihrer dem Zwischenraum 11 abgewandten Rückseite mit einer elektrisch leitenden Schicht 17 beschichtet ist, beispielsweise einer Edelmetallschicht Zwischen der elektrisch leitenden Schicht 17 und der Trägerschicht 16 ist eine Haflvermittlerschicht 18 angeordnet, die beispielsweise aus Al₂O₃ bestehen kann. An ihrer dem Zwischenraum 11 zugewandten Vorderseite weist die Trägerschicht eine Silanschicht 19 auf, an der die Rezeptoren 13 verankert sind.

Um eine gute kapazitive Kopplung zwischen dem Suspended Gate 10 und dem Kanalberelch 8 zu erreichen, ist die elektrisch leitende Schicht 17 relativ zu dem elektrischen Potential des Substrats 2 auf ein festes Bezugspotential gelegt.

Bei dem Ausführungsbeispiel nach Fig. 1 und 2 ist der Kanalberelch 8 offen ausgebildet (ISFET) und über das Dünnschichtoxid und den Zwischenraum 11 direkt an das Suspended Gate 10 kapazitiv gekoppelt Deutlich ist erkennbar, dass der Kanalbereich 8 an der dem Suspended Gate 10 gegenüberliegenden Seite des Zwischenraums 11 angeordnet ist.

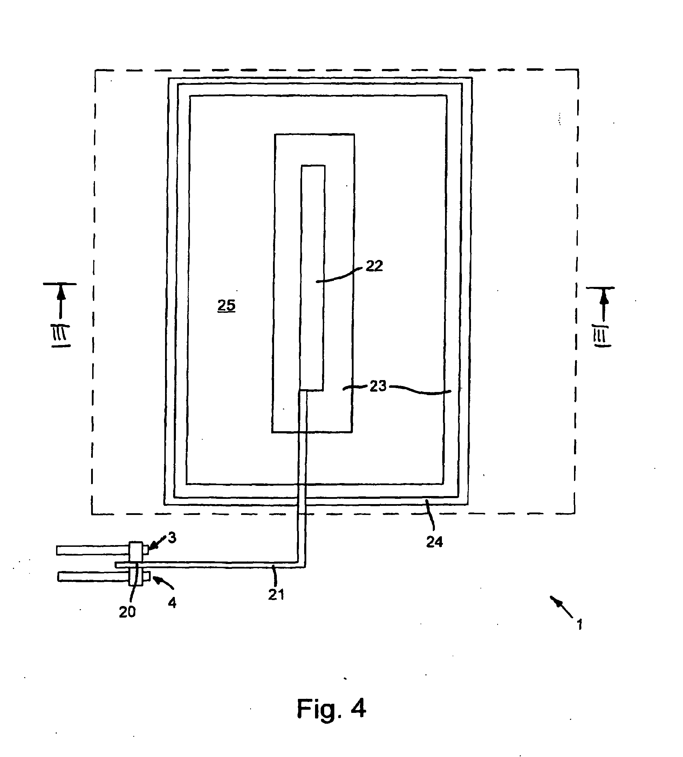

Bel dem Ausführungsbeispiel nach Fig. 3 und 4 ist der Kanalbereich 8 seitlich neben dem Suspended Gate 10 in dem Substrat 2 angeordnet und mit einer Gateelektrode 20 abgedeckt. Zur kapazitiven Ankopplung des Kanalbereichs 8 an die gassensitive Schicht 10 ist die Gateelektrode 20 über eine Leiterbahn 21 mit einer Sensorelektrode 22 verbunden, die an der dem Suspended Gate 10 gegenüberliegenden Seite des Zwischenraums 11 auf einer auf dem Substrat 2 befindlichen Isolationsschicht 23 angeordnet ist. Die Isolationsschicht 23 kann beispielsweise eine SiO₂-Schicht sein.

Der aus dem Substrat 2, der Drain 3, der Source 4, dem Kanalbereich 8 und ggf weiteren Schichten gebildete Grundkörper weist an seiner Oberfläche einen elektrisch leitfähigen Guardring 24 auf, der bei dem Ausführungsbeispiel nach Fig. 1 und 2 den Kanalbereich 8 und bei dem Ausführungsbeispiel nach Fig. 3 und 4 die zu dem zu dem Kanalbereich 8 führende Sensorelektrode 22 umgrenzt. Dabel ist bei dem Ausführungsbeispiel nach Fig. 1 und 2 zwischen dem Guardring 24 und dem Kanalbereich 8 und bei dem Ausführungsbeispiel nach Fig. 3 und 4 zwischen dem Guardring 24 und der Sensorelektrode 22 jeweils ein Abstand vorgesehen. Um den Kanalbereich 8 gegen außerhalb des von dem Guardring 24 umgrenzten Oberflächenbereichs der Vorrichtung 1 befindliche elektrische Potentiale abzuschirmen, liegt der 6uardring 24 auf einem definierten elektrischen Potential.

Bei dem Ausführungsbeispiel nach Fig. 1 und 2 ist zwischen dem Guardring 24 und dem Kanalbereich 8 an der Oberfläche des Grundkörpers eine hydrophobe Schicht 25 angeordnet. Diese befindet sich auf der elektrischen Isolationsschicht 23, die auf der Drain 3, der Source 4 und außerhalb des Kanalbereichs 8 befindlichen Bereichen des Substrats 2 angeordnet Ist In Fig. 1 ist erkennbar, dass die hydrophobe Schicht 25 den Kanalbereich 8 rahmenförmig umgrenzt und mit Abstand zu dem Kanalbereich 8 und dem Guardring 24 endet. Durch die hydrophobe Schicht 25 wird in dem zwischen dem Guardring 24 und dem Kanalbereich 8 befindlichen Teil der Oberfläche der Vorrichtung 1 die Adsorption von in Feuchtigkeit erheblich erschwert. Dadurch werden ein hoher elektrischer Widerstand an der Oberfläche und ein hohe Messgenauigkeit der Vorrichtung 1 ermöglicht.

Bei dem Ausführungsbeispiel nach Fig. 3 und 4 ist die hydrophobe Schicht 25 zwischen dem Guardring 24 und der Sensorelektrode 22 auf der Isolationsschicht 23 angeordnet. In Fig. 4 ist erkennbar, dass die hydrophobe Schicht 25 die Sensorelektrode 22 rahmenförmig umgrenzt und mit Abstand zu der Sensorelektrode 22 und dem Guardring 24 endet. Durch die hydrophobe Schicht 25 wird in dem zwischen dem Guardring 24 und der Sensorelehtrode 22 befindlichen Teil der Oberfläche der Vorrichtung 1 die Adsorption von Feuchtigkeit erschwert.

Die hydrophobe Schicht 25 besteht aus einem Polymer, vorzugsweise aus Poly(heptadecafluroacrylat). Bei der Fertigung der Vorrichtung 1 wird die hydrophobe Schicht 25 über eine Zwischenschicht an der Isolationsschicht 23 befestigt. Dazu wird zunächst die Zwischenschicht in Form einer Monolage eines benzophenonfunkfionalisierten Monochlorosilans auf der Isolaflonsschicht 23 aufgebracht In der Zwischenschicht entstehen während einer UV-Belichtung freie Radikale, die beim Kontaktieren der Isolationsschicht 23 an diese anbinden und dadurch die Zwischenschicht an der Isolationsschicht 23 befestigen.

Danach wird eine dünne Lage Poly(heptadecafluroacrylat) ganzflächig auf der Zwischenschicht deponiert. Nun werden mit Hilfe einer Schattenmaske die Stellen, an denen später die hydrophobe Schicht 25 sein soll, mit UV-Strahlung bestrahlt. Die Zwischenschicht kann eine photoreaktive Benzophenon-Gruppe aufwelsen, die bei der Bestrahlung mit dem UV-Licht an ein benachbartes Polymer der späteren hydrophoben Schicht 25 bindet. Dabei übernimmt die Benzophenon-Gruppe von dem benachbarten Polymer ein Wasserstoffatom, derart, dass zwischen der Benzophenon-Gruppe und dem benachbarte Polymer eine kovalente Verknüpfung gebildet wird (vgl. Prucker, O., Rühe, J. et al., Photochemlcal Attachment of Polymer Films to Solid Surfaces via Monolayers of Benzophenone Derivates, J. Am. Chem. Soc. (1999), 121, Seite 8766-8770). Nachdem das Polymer der hydrophoben Schicht 25 auf diese Weise in bestimmten Bereichen an der Oberfläche der Isolationsschicht 23 gebunden wurde, werden die ungebunden, an den nicht belichteten Stellen der Oberfläche befindlichen Polymere zur Bildung der strukturierten hydrophoben Schicht 25 entfernt, beispielsweise indem sie mit einem Lösungsmittel abgewaschen werden.

Erwähnt werden soll noch, dass auch andere Ausführungsbeispiele möglich sind, bei denen sich die hydrophobe Schicht 25 unterbrechungsfrei über den Kanalbereich 8, die Sensorelektrode 22 und/oder den Guardring 24 erstrecken kann. Die hydrophobe Schicht 25 kann auch direkt auf der Isolationsschicht 23 deponiert werden. Dies kann in der Welse geschehen, dass das hydrophobe Trichloro(1H,1H,2H,2H-perflurooctyl)silan (TPFS) aus der gasförmigen Phase bei einer Temperatur von etwa 100°C auf der Isolationsschicht 23 abgeschieden wird. Das Abscheiden des TPFS erfolgt vorzugsweise unter Abwesenheit von Feuchtigkeit, damit Querverbindungen und Inhomogenitäten in dem auf der Oberfläche abgeschiednen TPFS-Film vermieden werden. Außerdem ist darauf zu achten, dass während des Abscheidungsprozesses kelne Staubpartikel an der Oberfläche anhaften.

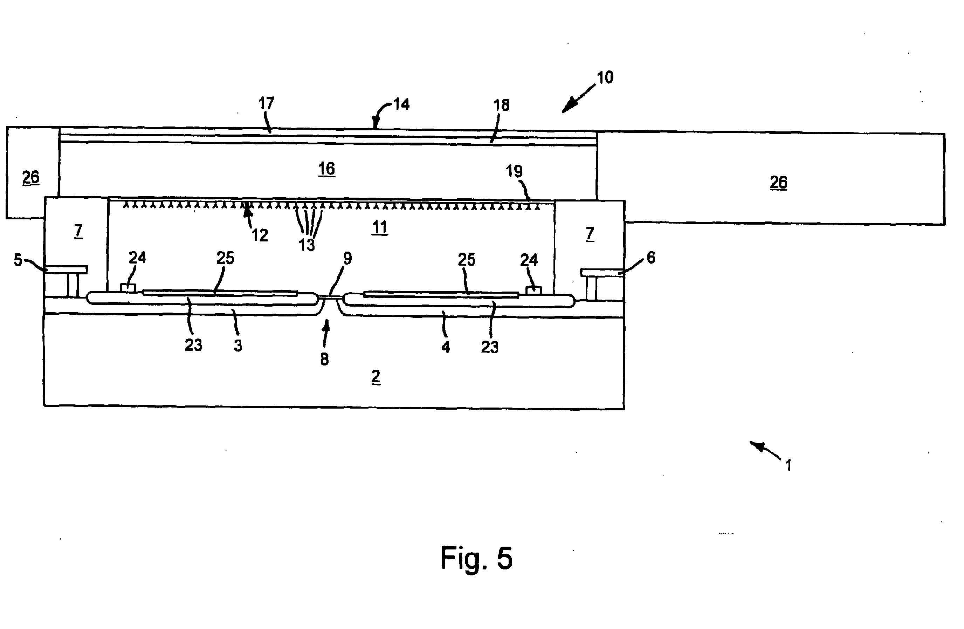

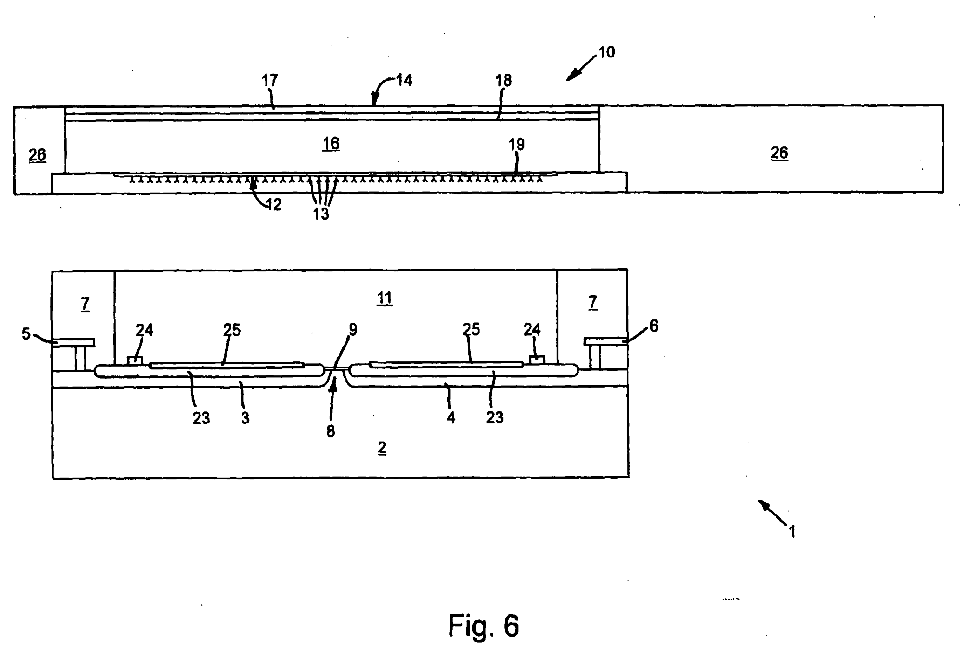

Auch bei dem in Fig. 5 und 6 gezeigten Ausführungsbeispiel weist die Vorrichtung 1 ein Substrat 2 eines ersten Ladungströgertyps auf, auf dem eine Drain 3 und eine Source 4 eines zweiten Ladungsträgertyps sowie ein Kanalbereich 8 angeordnet sind. Dem Kanalbereich 8 ist ein Suspended Gate 10 zugeordnet, das mittels einer Steckkupplung lösbar mit dem Substrat 2 verbindbar ist. Die Steckkupplung hat als Kupplungselement einen mit dem Substrat 2 verbundenen Vorsprung, der durch eine auf dem Substrat 2 deponierte Schicht 7 gebildet ist. An dem Suspended Gate und/oder einem damit verbundenen Griffstück 26 ist eine zu dem Vorsprung passende Aufnahmevertiefung gebildet, in die der Vorsprung in Verbindungsstellung der Steckkupplung formschlüssig eingreift.

In der in Fig. 5 gezeigten Verbindungsstellung ist das Suspended Gate 10 über einen Zwischenraum 11 von dem Kanalbereich 8 beabstandet. Wie bei den Ausführungsbeispielen gemäß Fig. 1 bis 4 sind an einem dem Zwischenraum 11 zugewandten Oberflächenbereich 12 des Suspended Gates 10 Rezeptoren 13 Immobilisiert, die für den zu detektierenden Liganden bindungsspezifisch sind und über den Zwischenraum 11 kapazitiv an den Kanalbereich 8 gekoppelt sind. Der Aufbau des aus dem Substrat 2 und den damit verbundenen Schichten gebildeten Grundkörpers entspricht Im Wesentlichen dem Aufbau des Grundkörpers nach Fig. 1.

Zum Inkontaktbringen des mindestens einen Rezeptors mit der zu untersuchenden Ausatemgas- und/oder Körperflüssigkeitsprobe kann das Suspended Gate 10 von dem Substrat 2 getrennt werden (vgl. Flg. 6).

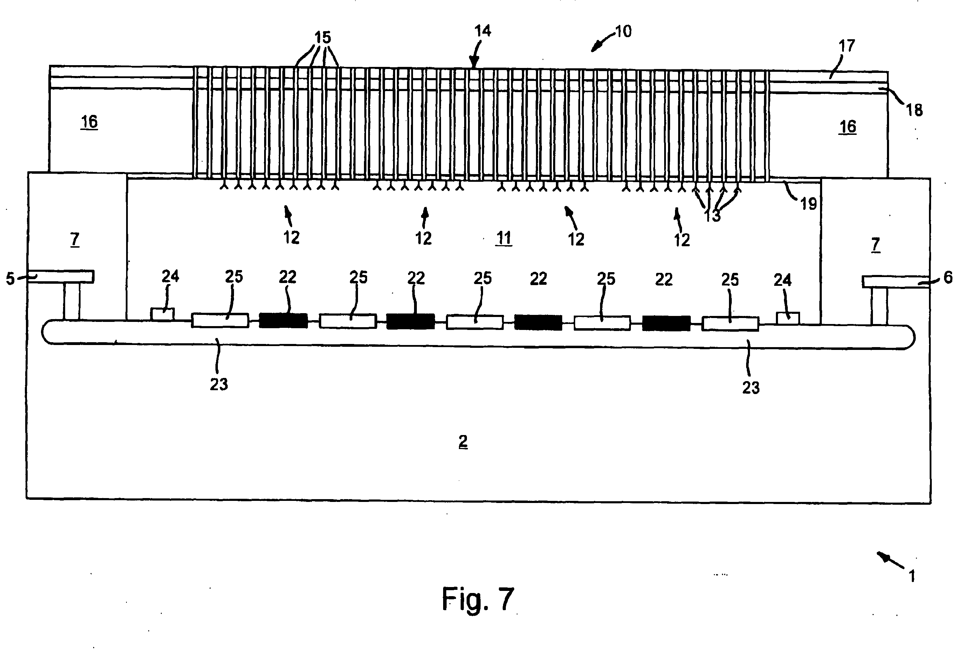

Bei dem Ausführungsbeispiel nach Fig. 7 weist das Suspended Gate 10 mehrere seitlich nebeneinander angeordnete Oberflächenbereiche 12 auf, auf denen Rezeptoren unterschiedlicher Art und/oder mit unterschiedlicher Oberflächenbelegungsdichte immobilisiert sind. Die Oberflächenbereiche 12 sind matrixförmig angeordnet und seitlich durch Lücken voneinander beabstandet. Jedem Oberflächenbereich ist jeweils auf dem Substrat 2 eine Sensorelektrode 22 zugeordnet, die mit einem zwischen einer Drain 3 und einer Source 4 gebildeten Kanalbereich 8 elektrisch leitend verbunden ist. Dadurch ist es möglich, mit der Vorrichtung in der zu untersuchenden Ausatemgas- bzw. Körperflüssigkeitsprobe mehrere Liganden gleichzeitig nachzuweisen.

## Patentansprüche

1. Vorrichtung (1) zum Nachweisen und/oder Messen mindestens eines in einem Analyten enthaltenen Liganden, wobei die Vorrichtung (1) ein Substrat (2) aufweist, auf dem mindestens ein Sensorbereich gebildet ist, der durch einen Zwischenraum (11) von einem Suspended Gate (10) beabstandet ist, und wobei das Suspended Gate (10) mindestens einen dem Zwischenraum (11) zugewandten Oberflächenbereich (12) aufweist, auf dem mindestens ein für den Liganden bindungsspezifischer Rezeptor (13) immobilisiert ist, der über den Zwischenraum (11) kapazitiv an den Sensorbereich gekoppelt ist, **dadurch gekennzeichnet, dass** der mindestens eine Rezeptor (1 3) eine Nukleinsäure und/oder ein Derivat davon und/oder ein Protein und/oder ein Peptid und/oder ein Kohlenhydrat und/oder ein Derivat eines Kohlenhydrats umfasst, dass die dem Sensorbereich abgewandte Rückseite (14) des Suspended Gates (10) mit dem Analyten in Verbindung bringbar ist, und dass das Suspended Gate (10) zum Inkontaktbringen des mindestens einen Rezeptors (1 3) mit dem Liganden für den Analyten durchlässig ausgebildet ist.

2. Vorrichtung (1) nach Anspruch 1, **dadurch gekennzeichnet, dass** das Suspended Gate (10) als mikroporöse Schicht ausgebildet ist oder eine solche aufweist.

3. Vorrichtung (1) nach Anspruch 2, **dadurch gekennzeichnet, dass** die mikroporöse Schicht mit einer vorzugsweise gitterförmig strukturierten Metallschicht beschichtet ist, an der ein elektrisches Bezugspotential anliegt.

4. Vorrichtung (1) nach einem der Ansprüche 1 bis 3, **dadurch gekennzeichnet, dass** das Suspended Gate (10) mindestens eine Durchtrittsöffnung (15) hat, die das Suspended Gate (10) quer zu seiner Erstreckungsebene durchsetzt.

5. Vorrichtung (1) nach einem der Ansprüche 1 bis 4
**dadurch gekennzeichnet, dass**
die dem Sensorbereich abgewandte Rückseite (14) des Suspended Gate (10) mit dem Analyten in Verbindung bringbar ist, und dass das Suspended Gate (10) zum Inkontaktbringen des mindestens einen Rezeptors (13) mit dem Liganden lösbar mit dem Substrat (2) verbunden ist.

6. Vorrichtung (1) nach einem der Ansprüche 1 bis 5, **dadurch gekennzeichnet, dass** zum lösbaren Verbinden des Suspended Gates (10) mit dem Substrat (2) eine Steckkupplung vorgesehen ist, die an dem Substrat (2) ein Kupplungselement und an dem Suspended Gate ein dazu passendes Kupplungsgegenstück aufweist.

7. Vorrichtung (1) nach einem der Ansprüche 1 bis 6, **dadurch gekennzeichnet, dass** das Suspended Gate (10) mehrere Oberfächenbereiche (12) aufweist, auf denen Rezeptoren (1 3) unterschiedlicher Art und/oder mit unterschiedlicher Oberflächenbelegungsdichte immobilisiert sind, und dass den einzelnen Oberflächenbereichen (12) des Suspended Gates (10) auf dem Substrat (2) jeweils ein Sensorbereich zugeordnet ist.

8. Vorrichtung (1) nach einem der Ansprüche 1 bis 7, **dadurch gekennzeichnet, dass** wenigstens ein Sensorbereich als Referenzsensorbereich ausgebildet ist, in dessen Detektionsreichweite kein Rezeptor (13) oder zumindest kein an einen in dem Analyten enthaltenen Liganden bindender Rezeptor angeordnet ist.

9. Vorrichtung (1) nach einem der Ansprüche 1 bis 8, **dadurch gekennzeichnet, dass** der Sensorbereich durch einen Kanalbereich (8) eines ISFET gebildet ist.

10. Vorrichtung (1) nach einem der Ansprüche 1 bis 9, **dadurch gekennzeichnet, dass** der Sensorbereich durch eine Sensorelektrode (22) gebildet ist, die elektrisch leitend mit einer an einem Kanalbereich (8) eines CCFET angeordneten Gateelektrode (20) verbunden ist.

11. Vorrichtung (1) nach einem der Ansprüche 1 bis 10, **dadurch gekennzeichnet, dass** sie mindestens einen Gassensor aufweist, insbesondere einen NO- und/oder CO₂-Sensor, und dass der Gassensor vorzugsweise einen ISFET und/oder CCFET mit einem gassensitiven Suspended Gate hat.

12. Vorrichtung (1) nach einem der Ansprüche 1 bis 11, **dadurch gekennzeichnet, dass** an der Oberfläche des Substrats (2) oder einer darauf befindlichen Schicht zwischen dem mindestens einen Rezeptor (1 3) und dem Kanalbereich (8) und/oder der Sensorelektrode (22) eine hydrophobe Schicht (25) angeordnet ist.

13. Vorrichtung (1) nach einem der Ansprüche 1 bis 12, **dadurch gekennzeichnet, dass** der mindestens eine Oberflächenbereich (12) eine Silanschicht (19) aufweist, und dass der mindestens eine Rezeptor an der Silanschicht (19) verankert ist.

14. Vorrichtung (1) nach einem der Ansprüche 1 bis 13, **dadurch gekennzeichnet, dass** das Suspended Gate (10) zumindest eine Polymerschicht aufweist, und dass der mindestens eine Rezeptor (13) an der Polymerschicht verankert ist.

15. Vorrichtung (1) nach einem der Ansprüche 1 bis 14, **dadurch gekennzeichnet, dass** die mindestens eine Drain (3) und/oder die zumindest eine Source (4) mit einem Messsignaleingang einer Auswerteeinrichtung verbunden ist, dass die Auswerteeinrichtung einen Datenspeicher aufweist, in dem mindestens ein Vergleichssignal abgelegt ist, und dass die Auswerteeinrichtung zum Vergleichen des an dem Messsignaleingang anliegenden Messsignals mit dem Vergleichssignal eine mit dem Datenspeicher und dem Messsignaleingang verbundene Vergleichseinrichtung aufweist

16. Vorrichtung (1) nach einem der Ansprüche 1 bis 15, **dadurch gekennzeichnet, dass** sie zum Temperieren des Zwischenraums (11) eine Heiz- und/oder Kühleinrichtung aufweist.

17. Verfahren zum Nachweisen und/oder Messen mindestens eines in einem Analyten enthaltenen Liganden mit Hilfe einer Vorrichtung (1) nach einem der Ansprüche 5 bis 16, **dadurch gekennzeichnet, dass** der Analyt mit dem mindestens einen auf dem Gate (10) immobilisierten Rezeptor (13) derart in Kontakt gebracht wird, dass der Ligand an diesen bindet, dass das Gate (10) mit dem Rezeptor (13) dem Sensorbereich zugewandt derart an dem Sensorbereich positioniert wird, dass zwischen diesem und dem Rezeptor (13) ein Zwischenraum (11) gebildet wird, und dass der Ligand danach mit Hilfe des Sensorbereichs durch den Zwischenraum hindurch kapazitiv detektiert wird.

## Claims

1. Device (1) for detecting and/or measuring at least one ligand, which is contained in an analyte, wherein the device (1) comprises a substrate (2) on which at least one sensor region is formed, which is spaced from a suspended gate (10) by an intermediate space (11), and wherein the suspended gate (10) has at least one surface region (12), which faces the intermediate space (11) and on which is immobilised at least one receptor (13) which is binding-specific to ligands and is capacitively coupled with the sensor region by way of the intermediate space (11), **characterised in that** the at least one receptor (13) comprises a nucleic acid and/or a derivative thereof and/or a protein and/or a peptide and/or a carbohydrate and/or a derivative of a carbohydrate, that the rear side (14) of the suspended gate (10) remote from the sensor region can be brought into connection with the analyte and that for bringing the at least one receptor (13) into contact with the ligand the suspended gate (10) is formed to be permeable by the analyte.

2. Device (1) according to claim 1, **characterised in that** suspended gate (10) is constructed as or has a microporous layer.

3. Device (1) according to claim 2, **characterised in that** the microporous layer is coated with a metal layer which is preferably of grid-shaped structure and to which an electrical reference potential is applied.

4. Device (1) according to any one of claims 1 to 3, **characterised in that** the suspended gate (10) has at least one passage opening (15) which penetrates the suspended gate (10) transversely to the length plane thereof.

5. Device (1) according to any one of claims 1 to 4, **characterised in that** the rear side (14) of the suspended gate (10) remote from the sensor region can be brought into connection with the analyte and that for bringing the at least one receptor (13) into contact with the ligand the suspended gate (10) is detachably connected with the substrate (2).

6. Device (1) according to any one of claims 1 to 5, **characterised in that** provided for detachable connection of the suspended gate (10) with the substrate (2) is a plug coupling which comprises a coupling element at the substrate (2) and a coupling counter-member, which matches the coupling element, at the suspended gate.

7. Device (1) according to any one of claims 1 to 6, **characterised in that** the suspended gate (10) has a plurality of surface regions (12) on which receptors (13) of different kind and/or with different surface occupation density are immobilised and that a respective sensor region is associated with each of the individual surface regions (12) of the suspended gate (10) on the substrate (2).

8. Device (1) according to any one of claims 1 to 7, **characterised in that** at least one sensor region is constructed as a reference sensor region, in the detection range of which no receptor (13) or at least no receptor binding with a ligand contained in the analyte is arranged.

9. Device (1) according to any one of claims 1 to 8, **characterised in that** the sensor region is formed by a channel region (8) of an ISFET.

10. Device (1) according to any one of claims 1 to 9, **characterised in that** the sensor region is formed by a sensor electrode (22) which is electrically conductively connected with a gate electrode (20) arranged at a channel region (8) of a CCFET.

11. Device (1) according to any one of claims 1 to 10, **characterised in that** it comprises at least one gas sensor, particularly a NO and/or CO₂ sensor and that the gas sensor preferably comprises an ISFET and/or CCFET with a gas-sensitive gate.

12. Device (1) according to any one of claims 1 to 11, **characterised in that** a hydrophobic layer (25) is arranged at the surface of the substrate (2) or a layer disposed thereon between the at least one receptor (13) and the channel region (8) and/or the sensor electrode (22).

13. Device (1) according to any one of claims 1 to 12, **characterised in that** the at least one surface region (12) has a silane layer (19) and the at least one receptor is anchored at the silane layer (19).

14. Device (1) according to any one of claims 1 to 13, **characterised in that** the suspended gate (10) has at least one polymer layer and that the at least one receptor (13) is anchored at the polymer layer.

15. Device (1) according to any one of claims 1 to 14, **characterised in that** the at least one drain (3) and/or the at least one source (4) is or are connected with a measurement signal input of an evaluating device, that the evaluating device has a data memory in which at least one comparison signal is filed and that the evaluating device for comparison of the measurement signal at the measurement signal input with the comparison signal has a comparison device connected with the data memory and the measurement signal input.

16. Device (1) according to any one of claims 1 to 15, **characterised in that** it has a heating and/or cooling device for temperature control of the intermediate space (11).

17. Method of detecting and/or measuring at least one ligand, which is contained in an analyte, with the help of a device (1) according to any one of claims 5 to 16, **characterised in that** the analyte is brought into contact in such a manner with the at least one receptor (13) immobilised on the gate (10) that the ligand binds therewith, that the gate (10) with the receptor (13) facing the sensor region is so positioned at the sensor region that an intermediate space (11) is formed between this and the receptor (13) and that the ligand is thereafter capacitively detected with the help of the sensor region via the intermediate space.

## Revendications

1. Dispositif (1), pour détecter et/ou mesurer au moins un ligand contenu dans un analyte, le dispositif (1) présentant un substrat (2), sur lequel est formée au moins une zone de capteur, espacée d'une grille suspendue (10) par un espace intermédiaire (11), et la grille suspendue (10) présentant au moins une zone de surface (12), tournée vers l'espace intermédiaire (11), sur laquelle au moins un récepteur (13), spécifique à une liaison pour le ligand, est immobilisé, récepteur (13) couplé par voie capacitive à la zone de capteur, par l'intermédiaire de l'espace intermédiaire (11), **caractérisé en ce que** le au moins un récepteur (13) comprend un acide nucléique et/ou un dérivé de celui-ci et/ou une protéine et/ou un peptide et/ou un hydrate de carbone et/ou un dérivé d'un hydrate de carbone, **en ce que** la face arrière (14), opposée à la zone de capteur, de la grille suspendue (10) est susceptible d'être mise en contact avec l'analyte, et **en ce que** la grille suspendue (10) est réalisée de manière à être perméable à l'analyte, pour la mise en contact du au moins un récepteur (13) avec le ligand.

2. Dispositif (1) selon la revendication 1, **caractérisé en ce que** la grille suspendue (10) est réalisée sous forme de couche microporeuse ou présente une telle couche microporeuse.

3. Dispositif (1) selon la revendication 2, **caractérisé en ce que** la couche microporeuse est revêtue d'une couche métallique de préférence structurée en forme de grille, sur laquelle est appliqué un potentiel de référence électrique.

4. Dispositif (1) selon l'une des revendications 1 à 3, **caractérisé en ce que** la grille suspendue (10) présente au moins une ouverture de passage (15), traversant la grille suspendue (10) transversalement à son plan d'étendue.

5. Dispositif (1) selon l'une des revendications 1 à 4, **caractérisé en ce que** la face arrière (14), opposée à la zone de capteur, de la grille suspendue (10) est susceptible d'être mise en contact avec l'analyte, et **en ce que** la grille suspendue (10) est reliée de manière désolidarisable au substrat (2), pour la mise en contact du au moins un récepteur (13) avec le ligand.

6. Dispositif (1) selon l'une des revendications 1 à 5, **caractérisé en ce que**, pour assurer la liaison désolidarisable de la grille suspendue (10) au substrat (2) est prévu un accouplement à embrochage, présentant sur le substrat (2) un élément d'accouplement et sur la grille suspendue un contre-élément d'accouplement lui étant adapté.

7. Dispositif (1) selon l'une des revendications 1 à 6, **caractérisé en ce que** la grille suspendue (10) présente plusieurs zones de surface (12), sur lesquelles des récepteurs (13) de différents genres et/ou à densité d'implantation en surface différente sont immobilisés, et **en ce que**, chaque fois, une zone de capteur est associée aux différentes zones de surfaces (12) de la grille suspendue (10) sur le substrat (2).

8. Dispositif (1) selon l'une des revendications 1 à 7, **caractérisé en ce qu'**au moins une zone de capteur est réalisée sous forme de zone de capteur de référence, dans la portée de détection de laquelle aucun récepteur (13) ou au moins aucun récepteur liant à un ligand contenu dans l'analyte, n'est disposé.

9. Dispositif (1) selon l'une des revendications 1 à 8, **caractérisé en ce que** la zone de capteur est formée par une zone de canal (8) d'un ISFET.

10. Dispositif (1) selon l'une des revendications 1 à 9, **caractérisé en ce que** la zone de capteur est formée par une électrode de capteur (22), reliée de manière électriquement conductrice, à une électrode de grille (20), disposée sur une zone de canal (8) d'un CCFET.

11. Dispositif (1) selon l'une des revendications 1 à 10, **caractérisé en ce qu'**il présente au moins un capteur à gaz, en particulier un capteur à NO et/ou un capteur à CO2, et **en ce que** le capteur à gaz présente de préférence un ISFET et/ou un CCFET avec une grille suspendue sensible aux gaz.

12. Dispositif (1) selon l'une des revendications 1 à 11, **caractérisé en ce qu'**une couche (25) hydrophobe est disposée sur la surface du substrat (2), ou sur une couche se trouvant dessus, entre le au moins un récepteur (13) et la zone de canal (8) et/ou l'électrode de capteur (22).

13. Dispositif (1) selon l'une des revendications 1 à 12, **caractérisé en ce que** la au moins une zone de surface (12) présente une couche de silane (19), et **en ce que** le au moins un récepteur est ancré à la couche de silane (19).

14. Dispositif (1) selon l'une des revendications 1 à 13, **caractérisé en ce que** la grille suspendue (10) présente au moins une couche de polymère, et **en ce que** le au moins un capteur (13) est ancré à la couche de polymère.

15. Dispositif (1) selon l'une des revendications 1 à 14, **caractérisé en ce que** le au moins un drain (3) et/ou la au moins une source (4) est/sont relié(s) à une entrée de signal de mesure d'un dispositif d'évaluation, **en ce que** le dispositif d'évaluation présente une mémoire de données, dans laquelle au moins un signal de comparaison est déposé, et **en ce que** le dispositif d'évaluation présente, pour comparer le signal de mesure, appliqué à l'entrée de signal de mesure, au signal de comparaison, un dispositif comparateur relié à la mémoire de données et à l'entrée de signal de mesure.

16. Dispositif (1) selon l'une des revendications 1 à 15, **caractérisé en ce qu'**il présente un dispositif de chauffage et/ou de régulation pour assurer la régulation de température de l'espace intermédiaire (11).

17. Procédé pour détecter et/ou mesurer au moins un ligand contenu dans un analyte, à l'aide d'un dispositif (1) selon l'une des revendications 1 à 16, **caractérisé en ce que** l'analyte est mis en contact avec le au moins un récepteur (13) immobilisé sur la grille (10), de manière que le ligand se lie à celui-ci, **en ce que** la grille (10), avec le récepteur (13) tourné vers la zone de capteur, est positionnée sur la zone de capteur, de manière qu'entre celle-ci et le récepteur (13) soit formé un espace intermédiaire (11), et **en ce que**, ensuite, le ligand est détecté par voie capacitive, à l'aide de la zone de capteur, à travers l'espace intermédiaire.
